Europäisches Patentamt

European Patent Office

Office européen des brevets

(19)

(11) Veröffentlichungsnummer: **0 070 415**
**B1**

(12) # EUROPÄISCHE PATENTSCHRIFT

(45) Veröffentlichungstag der Patentschrift:
02.05.85

(21) Anmeldenummer: 82105615.7

(22) Anmeldetag: 25.06.82

(51) Int. Cl.⁴: **C 01 B 25/238, C 22 B 3/00**

(54) Verfahren zur Extraktion von Schwermetallionen aus wässrigen Lösungen.

(30) Priorität: 15.07.81 DE 3127900

(43) Veröffentlichungstag der Anmeldung:
26.01.83 Patentblatt 83/4

(45) Bekanntmachung des Hinweises auf die Patenterteilung:
02.05.85 Patentblatt 85/18

(84) Benannte Vertragsstaaten:
AT BE CH DE FR GB IT LI NL SE

(56) Entgegenhaltungen:
EP - A - 0 023 428
US - A - 4 226 791

CHEMICAL ABSTRACTS, Band 94, Nr. 22, Juni 1981, Seite 148, Nr. 177487f, Columbus Ohio (USA);
CHEMICAL ABSTRACTS, Band 93, Nr. 18, 3. November 1980, Seite 483, Nr. 175529b, Columbus Ohio (USA); R. FITOUSSI et al.: "Uranium (VI) and ruthenium extraction by dialkyldithio-phosphoric acids"
CHEMICAL ABSTRACTS, Band 79, 1973, Seite 241, Nr. 108604v, Columbus Ohio (USA); I.S. LEVIN et al.: "Extraction of metals by alkyldithiophosphoric acids".
DERWENT JAPANESE PATENTS REPORT, Band Y, Nr. 50, 31. Januar 1978, Seite 23, Nr. SU-M 89633Y/50, Derwent Publications, London (GB);

(73) Patentinhaber: HOECHST AKTIENGESELLSCHAFT,
Postfach 80 03 20, D-6230 Frankfurt am Main 80 (DE)

(72) Erfinder: Schimmel, Günther, Dr., Am Beissel 27,
D-5042 Erftstadt (DE)
Erfinder: Krause, Werner, Dr., Alleestrasse 42,
D-5030 Hürth (DE)
Erfinder: Gradl, Reinhard, Dr., Am grünen Weg 6,
D-5030 Hürth (DE)

(56) Entgegenhaltungen: (Fortsetzung)
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft ein Verfahren zur flüssig/flüssig-Extraktion von Schwermetallionen, insbesondere von Ionen des Cadmiums, Kupfers, Zinks und Arsens aus wässrigen Lösungen mit Hilfe von wasserunlöslichen Dialkyldithiophosphorsäureestern als Extraktionsmittel.

Die Entfernung von Schwermetallionen aus wässrigen, phosphorsauren Lösungen bereitet in der Regel Schwierigkeiten, da in solchen Lösungen die Metallionen komplex gebunden sind.

Beispielsweise enthält die sog. Nassverfahrensphosphorsäure ein breites Spektrum von Verunreinigungen, wozu auch die umweltrelevanten Schwermetalle Kupfer, Arsen und insbesondere Cadmium zählen.

Bei der extraktiven Reinigung von Nassverfahrensphosphorsäure mit organischen Lösemitteln, (europäische Patentanmeldung EP-A-0 022 477), fällt ein phosphorsaures Raffinat an, das die gesamten Verunreinigungen der Rohphosphorsäure in relativ hoher Konzentration enthält. Daneben besteht dieses Raffinat im wesentlichen aus Restmengen nicht mehr extrahierbarer Phosphorsäure sowie, je nach Verfahrensgestaltung, mehr oder weniger grossen Mengen Schwefelsäure. Um dieses Raffinat geeignet deponieren zu können, muss es mit einer Base, z.B. Kalk, neutralisiert und in eine feste, unlösliche Form gebracht werden (europäische Patentanmeldung EP-A-0 017 741). Dabei entsteht eine grosse Menge eines hinsichtlich Umweltbelastung im allgemeinen ungefährlichen Deponieraffinates. Für bestimmte Deponiegelände kann jedoch trotzdem die Auflage bestehen, dass dieses Deponieprodukt weitgehend frei von umweltrelevanten Schwermetallen, insbesondere Cadmium, sein muss.

Mehrere Verfahren sind beschrieben, durch die Cadmium aus phosphorsauren Lösungen durch Fällung als Sulfid entfernt werden kann. Schwierigkeiten bereitet allerdings die hohe Löslichkeit des Cadmiumsulfids, insbesondere dann, wenn freie Schwefelsäure vorhanden ist. Diese Schwefelsäure ist sowohl in Rohphosphorsäure als auch in noch höherer Konzentration im Raffinat einer Phosphorsäure-Extraktionsreinigung enthalten.

So wird z.B. in der JP-B-7 575 115 die Cadmium-Fällung aus phosphorsauren Lösungen im Autoklaven bei Überdruck durch Zugabe eines grossen $Na_2S$-Überschusses beschrieben. Das Verfahren ist kompliziert, energieaufwendig und erfordert einen hohen Chemikalieneinsatz.

In der europäischen Patentanmeldung EP-A-0 023 195 wird ein Verfahren erwähnt, bei dem zuerst durch Basenzugabe die freie Schwefelsäure neutralisiert und danach mit einem wasserlöslichen Metallsulfid das Cadmium gefällt wird. Das hat zur Folge, dass die Phosphorsäure durch die Teilneutralisation einen Wertverlust erleidet und u.U. schon $P_2O_5$ mit ausfällt. Allen bisher genannten Verfahren ist gemein, dass eine grosse Säuremenge filtriert und anschliessend entgast werden muss.

Wie aus der zuletzt genannten Patentschrift hervorgeht, ist nicht allein der niedrige pH-Wert der Phosphorsäure für das Ausbleiben der Cadmiumsulfid-Fällung verantwortlich, sondern vor allem der Gehalt an freier Schwefelsäure. Deshalb lässt sich diese bekannte Methode nur dann anwenden, wenn das Phosphorsäure : Schwefelsäure-Verhältnis sehr gross ist. Dies ist jedoch z.B. bei einem Raffinat einer Phosphorsäureextraktions-Reinigung, das mehr $H_2SO_4$ als $H_3PO_4$ enthält, nicht der Fall.

Auch Dialkyldithiophosphorsäureester sind bereits bekannt als flüssig/flüssig-Extraktionsmittel zur Extraktion zweiwertiger Schwermetallkationen aus wässrigen schwefel- oder salzsauren Lösungen, deren Normalität jedoch nicht grösser als 1 sein darf (US-A-541 882; SU-A-447 936). Besonders vorteilhaft sollen, auch im stärker sauren Milieu, Mischungen aus Dialkyldithiophosphorsäureester und Trialkylphosphorsäureester sein (DE-A-2 717 302).

In der europäischen Patentanmeldung EP-A-0 023 428 wird die Extraktion von Metallen aus schwefelsauren Lösungen mit Diorganyldithiophosphorsäureestern beschrieben die im Organylrest mindestens einen Elektronenakzeptor, in Form einer Halogen-, Nitro-, Cyano-, Amino-, oder Alkoxygruppe, besitzen. Zwar wird dadurch in einigen Fällen die Reextrahierbarkeit der Metalle verbessert, jedoch werden gleichzeitig die Extraktionsausbeuten schlechter.

Die Extraktion von phosphorsauren Lösungen, insbesondere von solchen mit hohen $P_2O_5$-Gehalten, ist hingegen noch nie versucht worden. Die Extraktion von Metallen mit einer Wertigkeit > 2 aus Phosphorsäure mit Hilfe von organischen oder phosphororganischen Extraktionsmitteln ist auch schon mehrfach vorbeschrieben worden. Aufgrund der komplexierenden Wirkung des Phosphations liegen jedoch die Verteilungsgleichgewichte dabei recht ungünstig. Beispielsweise können Uran oder Vanadin mit dem Extraktionsmittelsystem Di(2-ethylhexyl)phosphorsäure/Tri-n-octylphosphinoxid (DEHPA/TOPO) aus sog. grüner Phosphorsäure, deren Maximalkonzentration 30% $P_2O_5$ betragen darf, extrahiert werden. Die Verteilungskoeffizienten sind < 10, wodurch mehrere Extraktionsstufen, sowie ein niedriges Phasenverhältnis A : O (anorganische zu organischer Phase) nötig sind. Aus konzentrierter Rohphosphorsäure (~ 50% $P_2O_5$) ist eine solche Extraktion nicht mehr möglich. Andere Extraktionssysteme, wie z.B. Diphosphorsäureester, die höhere Verteilungskoeffizienten besitzen, neigen dagegen zu rascher hydrolytischer Zersetzung.

Reines DEHPA oder DEHPA/TOPO-Mischungen sind jedoch nicht in der Lage, umweltrelevante zweiwertige Schwermetalle wie Cu, Cd und Zn oder auch Arsen aus Phosphorsäure zu extrahieren.

Aufgabe der vorliegenden Erfindung war es, ein Verfahren zu finden, dass es ermöglicht, aus phosphorsauren Lösungen, selbst solchen mit hohen $P_2O_5$-Konzentrationen von 40 bis 60%, Schwermetallionen insbesondere des Kupfers, Cadmiums, Zinks und Arsens, mit einem Extraktionsmittel zu extrahieren, das einen hohen Verteilungskoeffizienten ergibt, sich leicht von der phosphorsauren Phase abtrennen lässt und selbst nach mehrmaliger Reextraktion mit Mineralsäuren oder Alkalien noch über ihr volles Extraktionsvermögen verfügt und keine Zersetzungserscheinung zeigt.

Überraschenderweise wurde gefunden, dass sich diese Aufgabe lösen lässt, wenn man phosphorsaure Lösungen mit einem $P_2O_5$-Gehalt von 3 bis 80%, vorzugsweise von 6 bis 60%, einsetzt, die frei von emulsionsbildenden organischen Verunreinigungen sind oder vorher in bekannter Weise von diesen Verunreinigungen befreit wurden, diese Lösungen mit wasserunlöslichen Diestern der Dithiophosphorsäure extrahiert und die dabei erhaltene wässrige Phase von der Phase, welche die Diester der Dithiophosphorsäure enthält, abtrennt.

Als Diester eignen sich insbesondere Dialkyldithiophosphorsäureester mit einer Kettenlänge von 4 bis 18 C-Atomen im Alkylrest.

Vor allem dann, wenn man die extrahierten Metalle einer weiteren Verwendung zuführen will, empfiehlt es sich die Diester der Dithiophosphorsäure gelöst in einem wasserunlöslichen organischen Lösungsmittel, wie z.B. Kerosin, einzusetzen und die abgetrennte Diesterphase mit einer wässrigen Halogenwasserstoffsäurelösung zu reextrahieren, wobei die Metalle in die wässrige Phase übergehen. Als Halogenwasserstoffsäure wird vorzugsweise Brom- oder Jodwasserstoff verwendet. Vorteilhafterweise verfährt man dabei so, dass man die abgetrennte Diesterphase mit einer wässrigen Lösung einer alkalischen Verbindung reextrahiert bevor man sie mit dem Halogenwasserstoff behandelt und den alkalischen Extrakt mit dem anschliessend erhaltenen halogenwasserstoffsauren Extrakt, gegebenenfalls unter Zusatz weiterer Mengen einer alkalischen Verbindung, zu einer Mischung mit einem pH-Wert von mindestens 7 vereinigt.

Vorteilhafterweise setzt man die genannten Diester in einer Reinheit grösser als 95% ein, wie man sie aus $P_4S_{10}$ und Alkohol in Gegenwart von Katalysatoren erhält, da diese Produkte selbst nach mehrmaligen Extraktionen und Reextraktionen noch über ihr volles Extraktionsvermögen verfügen und keine Zersetzungserscheinungen aufweisen.

Dies hat den Vorteil, dass man die Diester, gegebenenfalls zusammen mit dem wasserunlöslichen organischen Lösungsmittel, nach Reextraktion der Schwermetallionen im Kreislauf führen kann.

Wird eine Wiedergewinnung der entfernten Metalle nicht gewünscht, so ist es ratsam, die Diesterphase, nach Abtrennung von der wässrigen Phase durch Neutralisation mit einer basischen Verbindung direkt in ein Deponieprodukt zu verwandeln, wobei man zweckmässigerweise entweder von vornherein auf den Einsatz des organischen Lösungsmittels verzichtet, oder das Lösungsmittel von der Diesterphase abtrennt.

Die Mengen, in denen die Diester eingesetzt werden, sollten 0,05 bis 40 Gew.-%, vorzugsweise 0,2 bis 20 Gew.-%, bezogen auf die Menge an phosphorsaurer Lösung, betragen.

Für den Fachmann war nicht vorhersehbar, dass es durch das erfindungsgemässe Verfahren gelingen würde, aus konzentrierten phosphorsauren Lösungen, deren Eigenschaft, mit Schwermetallionen stabile Komplexe zu bilden, bekannt ist, selbst bei Gehalten an $P_2O_5$ von etwa 50 Gew.-% und mehr mit einem sehr hohen Verteilungskoeffizienten Metallionen wie z.B. des Cadmiums und Kupfers quantitativ, aber auch des Arsens mindestens teilweise zu extrahieren.

Dabei sind die Verteilungskoeffizienten so gross, dass selbst bei einem Phasenverhältnis von phosphorsaurer : organischer Phase (10 gew.%ige Lösung des Dialkyldithiophosphorsäureesters in Kerosin) wie 50 : 1 in einstufiger Verfahrensweise eine praktisch völlige Entfernung der Elemente Kupfer und Cadmium erfolgt.

Die weitgehende Abtrennung der Schwermetalle aus der organischen Phase gelingt am besten in zwei Teilschritten, und zwar wird die Extraktphase mit einer verdünnten wässrigen Natronlauge behandelt, wobei Arsen sowie teilweise z.B. Cadmium und Zink reextrahiert werden, sodann mit einer Halogenwasserstoffsäure, wobei Cadmium und Zink quantitativ und Kupfer zum grössten Teil reextrahiert werden.

Ferner wird bei dieser Behandlung der Dialkyldithiophosphorsäureester, der zum Teil in Salzform vorliegt, quantitativ wieder in die Säureform überführt.

Die die Schwermetall enthaltenden Natronlauge- und Säurephasen werden vereinigt und mit einer Base, vorzugsweise Kalk, neutralisiert, wobei die Metalle in eine unlösliche Hydroxidform o.ä. überführt werden und entsprechend deponiert oder aufgearbeitet werden können.

Für eine kontinuierliche Verfahrensdurchführung unter weitgehender Entfernung der Elemente Cu, Cd und As empfiehlt es sich, die Reextraktion über mehrere Cyclen nur mit Salzsäure vorzunehmen, wobei die Elemente mit hohen Verteilungskoeffizienten (z.B. Cd, Zn) gestrippt werden, während sich andere mit sehr kleinen Reextraktions-Verteilungskoeffizienten wie Cu und As im Extrakt anreichern. Da nach einer bestimmten Zahl von Extraktions-/Reextraktionscyclen die Maximal-Beladung der Extraktphase mit diesen Elementen erreicht ist, muss sodann deren Reextraktion alkalisch (für As) bzw. sauer mit Brom- oder Jodwasserstoffsäure (z.B. für Cu) erfolgen.

Eine weitere bevorzugte Ausführungsform der Entfernung von Schwermetallen aus phosphorsauren Lösungen verzichtet generell auf die Reextraktion. In diesem Fall wird die zur Extraktion verwendete Dialkyldithiophosphorsäure in einem niedrigsiedenden inerte Lösemittel wie z.B. Hexan oder Petrolether eingesetzt. Die metallbeladene organische Phase wird sodann auf geeignetem Wege vom Lösemittel gestrippt und das verbleibende saure Gemisch aus Salzen und freier Dialkyldithiophosphorsäure mit einer geeigneten Base wie z.B. Kalk neutralisiert. Auf die Verwendung eines Lösemittels kann auch ganz verzichtet werden.

Bezüglich der Wahl des Dialkyldithiophosphorsäureesters gilt, dass mit wachsender Kettenlänge im Alkylrest die Extraktionsfähigkeit nachlässt, jedoch die Reextrahierbarkeit mit Säuren aus der organischen Phase zunimmt. Je nach Lage des zu lösenden Problems wird also ein anderer Ester benötigt. Im Interesse einer möglichst hohen Reextrahierbarkeit, insbesondere des Kupfers, sind Dialkyldithiophosphorsäureester mit einer C-Zahl von 8-14 im Alkylrest besonders geeignet.

Das Phasenverhältnis anorganischer Phase (A) : organischer Phase (O) bei der Extraktion kann in einem weiteren Bereich variieren und dem jeweiligen Kationengehalt der phosphorsauren Lösung angepasst werden, jedoch empfiehlt sich zur Erzielung der grösstmöglichen Selektivität ein möglichst hohes Verhältnis A : O, so dass die zu eliminierenden Elemente mit hohen Verteilungskoeffizienten (Cu, Cd) noch fast quantitativ extrahiert werden und die anderen Metalle bei der Komplexbildungsreaktion verdrängen.

Für die Reextraktion mit Salzsäure kann ebenfalls ein hohes Phasenverhältnis O : A gewählt werden, z.B. > 20 : 1, da die Verteilungskoeffizienten für z.B. Cd und Zn dies zulassen. Für die Reextraktion mit Bromwasserstoffsäure sollte das Verhältnis möglichst nicht grösser als 5 : 1 sein, da der Verteilungskoeffizienten z.B. für Cu, nicht so hoch ist.

Die nachfolgenden Beispiele sollen die Erfindung näher beschreiben, ohne jedoch den Gegenstand der Erfindung darauf zu beschränken.

### Beispiele 1 bis 5

Eine handelsübliche Marokko-Rohphosphorsäure (46 Gew.-% $P_2O_5$, 0,4 Gew.-% $SO_4$, 200 ppm $C_{org}$: Beispiele 2 bis 5) bzw. ein Gemisch aus einer solchen und einer Florida-Rohsäure (49 Gew.-% $P_2O_5$, 0,6 Gew.-% $SO_4$, 300 ppm $C_{org}$: Beispiel 1), die in bekannter Weise mit Aktivkohle und Kalk vorgereinigt waren («green acid»), werden in wechselndem Volumenverhältnis mit einer 10 gew.%igen Lösung eines Dialkyldithiophosphorsäureesters $(RO)_2$ PSSH in Kerosin 15 Minuten intensiv gerührt. Nach dem Absitzen werden beide Phasen analysiert. Die Ergebnisse sind in Tabelle 1 zusammengefasst.

### Beispiel 6

Es wird wie in Beispiel 1 bis 5 verfahren, jedoch wird eine an $P_2O_5$ 30 gew.%ige grüne Säure verwendet, die z.B. in grossen Mengen auch als Ausgangsstoff zur Uran-Extraktion dient; Ergebnisse siehe Tabelle 1.

### Beispiel 7

Anstelle einer Rohphosphorsäure wird als Rohstoff das von noch gelöstem Alkohol gestrippte Raffinat (Rückstand) einer Phosphorsäure-Extraktionsreinigung verwendet, welches entsteht, wenn man eine grüne konzentrierte Rohphosphorsäure unter Zusatz von Schwefelsäure mit Amylalkohol extrahiert (7,4 Gew.-% $P_2O_5$, 11,6 Gew.-% $SO_4$, 200 ppm $C_{org}$); Ergebnis siehe Tabelle 1.

### Beispiele 8 bis 10

Ein Extrakt der 10 Gew.-% Di(2-ethylhexyl)dithiophosphorsäure und 0,17 Gew.-% Cd, 0,34 Gew.-% Cu, 0,047 Gew.-% As und 0,1 Gew.-% Zn in Kerosin gelöst enthält, wird im Verhältnis A : O = 1 : 20 mit 36 gew.%iger Salzsäure bzw. im Verhältnis A : O = 1 : 1 mit 48 gew.%iger Bromwasserstoffsäure bzw. im Verhältnis A : O = 1 : 5 mit 10 gew.%iger Natronlauge reextrahiert; Ergebnisse siehe Tabelle 2.

### Beispiel 11

Eine aus der Reextraktion stammende 36 gew.%ige salzsaure Phase (0,9 Gew.-% Cd; 0,5 Gew.-% Zn) und eine 5 gew.%ige Natronlauge-Phase (0,07 Gew.-% As) werden im Mengenverhältnis 1 : 1 vereinigt, mit Kalk bis Ph 10,5 neutralisiert und die Maische über ein Saugfilter filtriert. Im Filtrat sind anschliessend < 1 ppm Cd, 2 ppm As und 7 ppm Zn enthalten.

Wird eine kupferhaltige Bromwasserstoffsäure (1 Gew.-% Cu, 48 Gew.-% HBr) auf die gleiche Weise neutralisiert und filtriert, sind im Filtrat < 1 ppm Cu enthalten.

### Beispiel 12

Jeweils frische Portionen der in Beispiel 2 bis 5 beschriebenen Rohsäure werden im Verhältnis A : O = 10 : 1 fünfmal mit derselben 10 gew.%igen Lösung von Di(2-ethylhexyl)dithiophosphorsäure in Kerosin extrahiert. Nach jeder Extraktion wird die organische Phase sukzessive mit 10 gew.%iger Natronlauge sowie mit 36 gew.%iger Salzsäure jeweils im Verhältnis A : O = 1 : 10 reextrahiert. Nach der fünften Extraktion werden in der Phosphorsäure < 0,5 ppm Cd, < 0,5 ppm Cu und 4 ppm As gefunden.

### Beispiel 13

Es wird wie in Beispiel 3 verfahren, jedoch wird als organisches Verdünnungsmittel statt Kerosin n-Hexan verwendet. Nach erfolgter Extraktion und Phasentrennung wird das Hexan von der Extraktphase abdestilliert und zur erneuten Verwendung als Lösemittel zurückgeführt. Der verbleibende zähflüssige Rückstand wird mit festem CaO im Verhältnis 1 : 1,5 zu einer festen Masse verrührt und verworfen.

### Beispiel 14

Analog Beispiel 3 wird eine Extraktion durchgeführt, wobei auf die Verwendung eines Lösemittels verzichtet wird, so dass ein Phasenverhältnis A : O = 500 : 1 resultiert. Die Säure verfügt nach der Extraktion über dieselben analytischen Daten wie in Tabelle 1, Beispiel 3, beschrieben.

Tabelle 1 - Extraktion

| Bei-spiel | A : O | R in $(RO)_2PSSH$ | Phase | Cd | Cu | ppm As | Zn | Ni | Verteilungskoeffizient $E_a$ Cd | Cu | Zn | Ni |
|---|---|---|---|---|---|---|---|---|---|---|---|---|
| 1 | 2 : 1 | 2-Ethylhexyl | a | 11 | 15 | 4 | | | | | | |
| | | | b | <0,5 | <0,5 | 1 | | | >57 | >80 | n.b. | n.b. |
| | | | c | 43 | 60 | n.b. | | | | | | |
| 2 | 20 : 1 | 2-Ethylhexyl | a | 21 | 36 | 10 | | | | | | |
| | | | b | <1 | <1 | 5 | | | >433 | >774 | n.b. | n.b. |
| | | | c | 840 | 1500 | n.b. | | | | | | |

Tabelle 1 - Extraktion (Fortsetzung)

| Bei-spiel | A : O | R in (RO)$_2$PSSH | Phase | Cd | Cu | As | Zn | Ni | Cd | Cu | Zn | Ni |
|---|---|---|---|---|---|---|---|---|---|---|---|---|
| | | | | | | ppm | | | Verteilungskoeffizient E$_a$ | | | |
| 3 | 50 : 1 | 2-Ethylhexyl | a | 21 | 36 | 10 | 400 | 50 | | | | |
| | | | b | 3 | <1 | 5 | 390 | 50 | 300 | >1813 | 1,37 | 0,23 |
| | | | c | 1700 | 3400 | 470 | 1000 | 22 | | | | |
| 4 | 10 : 1 | Dodecyl | a | 21 | 36 | 10 | | | | | | |
| | | | b | <1 | <1 | 6 | | | >213 | >374 | n.b. | n.b. |
| | | | c | 410 | 720 | n.b. | | | | | | |
| 5 | 5 : 1 | Octadecyl | a | 21 | 36 | 10 | | | | | | |
| | | | b | 14 | 10 | 6 | | | 2,5 | 13 | n.b. | n.b. |
| | | | c | 66 | 240 | n.b. | | | | | | |
| 6 | 20 : 1 | 2-Ethylhexyl | a | 6 | 8 | 2,5 | | | | | | |
| | | | b | <0,5 | <0,5 | 1 | | | >235 | >328 | n.b. | n.b. |
| | | | c | 200 | 280 | n.b. | | | | | | |
| 7 | 50 : 1 | 2-Ethylhexyl | a | n.b. | n.b. | 1 | n.b. | n.b. | | | | |
| | | | b | <1 | <1 | 0,3 | 540 | 60 | >933 | >1933 | 0,53 | 0,78 |
| | | | c | 1400 | 2900 | n.b. | 430 | 70 | | | | |

a = Säure bzw. Raffinat vor Extraktion
b = Säure bzw. Raffinat nach Extraktion
c = Extraktphase

Tabelle 2 - Reextraktion

| Beispiel | A : O | Reextraktionsmittel | Cd | Cu | As | Zn |
|---|---|---|---|---|---|---|
| | | | ppm in der org. Phase nach Reextraktion | | | |
| 8 | 1 : 20 | HCl (36%ig) | <1 | 3400 | 470 | 3 |
| 9 | 1 : 1 | HBr (48%ig) | <1 | 950 | 470 | <1 |
| 10 | 1 : 5 | NaOH (10%ig) | 900 | 3400 | <10 | 100 |

## Patentansprüche

1. Verfahren zur Entfernung von Schwermetallionen aus sauren, wässrigen Lösungen durch Extraktion mit wasserunlöslichen Diestern der Dithiophosphorsäure und Trennung der beiden entstandenen flüssigen Phasen voneinander, dadurch gekennzeichnet, dass man zur Entfernung von Ionen des Cadmiums, Kupfers, Zinks und Arsens aus Nassverfahrensphosphorsäure mit einem P$_2$O$_5$-Gehalt von 3 bis 80 Gew.-%, die Nassverfahrensphosphorsäure vor der Extraktion von emulsionsbildenden organischen Verunreinigungen befreit.

2. Verfahren nach Anspruch 1, dadurch gekennzeichnet, dass man zur Gewinnung der extrahierten Schwermetalle die abgetrennte Diesterphase mit einer wässrigen Lösung einer alkalischen Verbindung reextrahiert, bevor man sie mit einer Halogenwasserstoffsäurelösung behandelt, und den erhaltenen alkalischen Extrakt mit dem anschliessend gewonnenen halogenwasserstoffsauren Extrakt, gegebenenfalls unter Zusatz weiterer Mengen einer alkalischen Verbindung, zu einer Mischung mit einem pH-Wert von mindestens 7 vereinigt.

## Claims

1. Process for removing heavy metal ions from acid aqueous solutions by extraction with a water-insoluble diester of dithiophosphoric acid and separation of the resulting two liquid phases from one another, which comprises removing ions of cadmium, copper, zinc and arsenic from wet-processed phosphoric acid containing 3 to 80 weight% P$_2$O$_5$ by freeing the wet-processed phosphoric acid from emulsion-forming organic impurities prior to subjecting it to the extraction.

2. Process as claimed in claim 1, wherein the extracted heavy metals are recovered by reextracting the separated diester phase with an aqueous solution of an alkaline compound prior to treating it with a hydrohalic acid solution, and by making the resulting alkaline extract and the resulting hydrohalic extract into a mixture with a pH value of at least 7, if desired with addition of further quantities of an alkaline compound.

## Revendications

1. Procédé pour l'élimination d'ions de métaux lourds de solutions aqueuses acides par extraction à l'aide de diesters d'acide dithiophosphorique insolubles dans l'eau comme agents d'extraction et séparation des deux phases liquides formées l'une de l'autre, caractérisé en ce que, pour éliminer les ions de cadmium, de cuivre, de zinc et d'arsenic de l'acide phosphorique du procédé humide d'une teneur en $P_2O_5$ de 3 à 80% en poids, on débarrasse l'acide phosphorique du procédé humide des impuretés organiques formant des émulsions avant de le soumettre à l'extraction.

2. Procédé selon la revendication 1, caractérisé en ce que, pour récupérer les métaux lourds extraits, on réextrait la phase de diester séparée par une solution aqueuse d'un composé alcalin avant de la traiter par une solution d'un acide halohydrique et on réunit l'extrait alcalin avec l'extrait halohydrique obtenu ensuite, éventuellement avec addition de nouvelles quantités d'un composé alcalin, en un mélange ayant un pH d'au moins 7.